# EUROPEAN PATENT SPECIFICATION

(11) **EP 2 050 201 B1**
(45) Date of publication and mention of the grant of the patent: **05.10.2016**
(21) Application number: 07794143.3
(22) Date of filing: 24.07.2007
(51) Int. Cl.: H04W 52/54, H04W 52/36, H04W 52/22, H04W 52/08

(54) **PROPAGATION DELAY BASED TRANSMIT POWER CONTROL**
AUF AUSBREITUNGSVERZÖGERUNG BASIERENDE SENDELEISTUNGSREGELUNG
GESTION DE PUISSANCE DE TRANSMISSION BASÉE SUR UN TEMPS DE RETARD DE PROPAGATION

(30) Priority: 09.08.2006 US 501242
(43) Date of publication of application: 22.04.2009
(73) Proprietor: Telefonaktiebolaget LM Ericsson (publ), 164 83 Stockholm (SE)
(72) Inventor: PETTERSSON, Jan, S-177 70 Järfälla (SE); ÖSTMAN, Thomas, S-163 61 Spånga (SE)
(74) Representative: Ericsson
(86) International application number: PCT/SE2007/050533
(87) International publication number: WO 2008/018830

(56) References cited:
- WO-A1-01/03329
- WO-A1-01/03329
- WO-A1-98/49785
- WO-A1-2005/034380
- WO-A2-99/08397
- WO-A2-99/08397
- US-A1- 2007 097 900

## Description

### TECHNICAL FIELD

The technical field is radio communications, and more particularly, radio transmission power control. One non-limiting application is to cellular communications systems.

### BACKGROUND

In cellular communications systems, a mobile radio station communicates over an assigned radio channel with a radio base station. Sometimes mobile stations (MSs) are grouped under the term a user equipment (UE). The terms are used interchangeably here with the understanding that a mobile station/UE includes both mobile and stationary wireless communications devices. Several base stations are coupled to a switching node which is typically connected to a gateway that interfaces the cellular communications system with other communication systems. A call placed from an external network to a mobile station is directed to the gateway, and from the gateway through one or more switching nodes to a base station which serves the called mobile station. The base station pages the called mobile station and establishes a radio communications channel. A call originated by the mobile station follows a similar path in the opposite direction.

Interference is problem in any cellular communications system, and is a particularly severe problem in Code Division Multiple Access (CDMA) systems. In CDMA systems, spreading codes are used to distinguish information associated with different mobile stations or base stations transmitting over the same radio frequency band-- hence the term "spread spectrum." If one mobile station transmits at a power output that is too large, the interference it creates degrades the signal-to-interference ratio (SIR) of signals received from other mobile radios to the point that a receiving base station cannot correctly demodulate transmissions from the other mobile radios. In fact, if a mobile station transmits a signal at twice the power level needed for the signal to be accurately received at the base station receiver, that mobile's signal occupies roughly twice the system capacity as it would if the signal were transmit at the optimum power level. Unregulated, it is not uncommon for a "strong" mobile station to transmit signals that are received at the base station at many, many times the strength of other mobile transmissions. Such a loss of system capacity to excessively "strong" mobile stations is unacceptable.

A significant goal for most if not all radio transmit power control procedures is to keep the signal strength and/or quality of the signal detected by a receiver above a threshold without using unnecessarily high transmit power. In contrast to infrequent power regulation schemes mentioned above, most CDMA-based systems employ a relatively high sampling rate for the power control algorithm, e.g., 1500 or 1600 times per second. To minimize overhead control signaling, only one bit is used to communicate power control adjustments to the radio transmitter.

In CDMA-based standard and other cellular communications systems, the power is stepwise increased or decreased based upon a comparison of the received signal strength or other signal parameter like SIR with a threshold. The receiver controls the transmitter's power by issuing power control commands -- power up or power down -- at the same high sampling rate based on measurements of a signal-to-interference ratio. If the measured signal parameter value is less than a target signal parameter value, the power up command is issued; otherwise, the power down command is issued. The radio transmitter responds to the power control commands by increasing or decreasing its transmit output power level *P*, for example, by a certain incremental power step Δ, i.e., *P ←P+Δ or P←P-Δ.*

At the example sampling rate noted above, either a power up or a power down command issues every 0.667 or 0.625 msec. As a result, the transmit power level is never perfectly constant or static. Accordingly, even in an ideal radio environment, the incremental power control commands continually alternate between power up and power down so that the transmit power level and the received signal quality oscillate up and down an incremental step around a target value. In order to maintain the quality of the received signal always above a prescribed limit, the target value needs to be set slightly higher than that limit so that the received signal quality after the power down step is still above the prescribed limit.

There is a problem with this type of power control algorithm, namely, the sometimes considerable delay between the time a transmit power control command is issued by a radio receiving and evaluating the signal quality of the received signal and the time when the effect on the transmit power level of the transmitting radio is experienced. This delay is referred to generally as "power loop control delay" and can include a total time delay period or some portion thereof.

Indeed, if the delay between the issuance of the command and its effect is larger than the time intervals separating issuance of two consecutive power control commands, the transmit power level will be increased or decreased more than it should or otherwise needs to be. For example, if the receiver determines that a received signal is below a target SIR value, a power up command is issued to the transmitter. However, due to the power control loop delay, the power up command does not take effect until after the radio receiver again samples the received signal quality, determines that it is still below the target value, and issues another power up command. As a result, the transmit output power level is adjusted upwards twice even though, at least in some instances, a single power up adjustment would have been sufficient. When the received signal quality is finally detected as exceeding the target value, the same over-reactive power control procedure is likely repeated with power down commands.

Such over-reactive power control is undesirable for several reasons. First, the transmit power levels have higher peaks resulting in greater interference for other users of the system. Second, the higher peak oscillations may lead to instabilities in the radio network. Third, because the oscillation peaks have a higher amplitude, the target signal quality will have to be increased so that the negative oscillation peak does not dip below the minimum desired signal quality. This results in a higher average power increasing the battery drain for mobile stations and the interference to other users.

In general, because of the larger delay, the power control algorithm overreacts causing greater oscillations in transmit power and in the received signal quality. Consider the time during T_{d} during which the signal-to-interference ratio is measured and found to be slightly below the target signal-to-interference ratio resulting in the issuance of a power up command shortly before the expiration of time period T_{d}. For the next measurement time interval, the power up command has not yet taken effect (at the least, the receiver has not yet seen its effect), and thus the signal quality measurement still indicates that the detected SIR is below the target. Therefore, another power up command is issued. As a result, the transmit power is adjusted upwards twice when a single power up command would have been sufficient. When the receive signal quality finally exceeds the target SIR, the same process is repeated with the power down commands.

Even in a static radio environment, the power control oscillation period for this kind of incremental method may be multiple SIR measurement time intervals. Various time delay associated problems are further exasperated with increasing delay. Indeed, the larger the number of pending issued power control commands that have not yet taken effect, the greater the oscillation, instability, interference, power consumption, etc.

One approach for dealing with the transmit power oscillations caused by power control loop delay is described in commonly-assigned US 6,493,541. There, the delay caused by the power control loop is compensated for by adjusting a signal to interference (SIR) or other received signal quality value of a received signal based on a previous power control command already sent but whose effect has not yet been experienced. Adjusting the SIR value lower or higher offsets the delay effects.

Another approach is described in commonly-assigned WO 2005/034380 A1. The transmit power control command signal is Fourier transformed to identify a frequency of oscillation corresponding to the transmit power control command signal. From that loop delay frequency, a predistortion pattern is determined, which is then applied to the transmit power control signal before transmission to reduce the oscillation peaks. While quite accurate and comprehensive, this approach may be more sophisticated than is needed in some situations. Moreover, there may be existing base stations and/or mobile stations constructed using ASICs and/or other hardware that do not lend themselves to implementing approaches that require significant additional data processing. For these reasons, the inventors conceived of a simpler technique for controlling transmit power control oscillations caused by the power control loop delay that is also easy to implement in existing base stations and/or mobile stations without the need for significant additional data processing.

WO 99/08397 relates to a a method and apparatus for controlling a power level of a transmitted signal sent from a second station to a first station in a communication system maintains a desired power level of a signal received at the first station. The first station sends a power control command to the second station directing the second station to either increase or decrease the power level of the transmitted signal. The first station generates the power control command based on the power level of the received signal, the desired power level, and at least one pending power control command. Pending power control commands include those power control commands that are propagating between the first station and the second station.

WO 01/03329 relates to compensation for transmit power control time delays between a radio transmitter and receiver that adversely affect the transmit power control process. A time delay associated with a power control loop is compensated for by adjusting a detected signal quality value of a received signal, e.g., signal-to-interference ratio (SIR), based on one or more previous power control commands already sent but whose effect has not yet been experienced.

### SUMMARY

The transmit power of a radio transmitter associated with a transmitting node communicating with a receiving node is controlled based on a propagation delay time associated with communication between the transmitting node and the receiving node. A power control loop is established for controlling a transmission power level for transmitting a signal from the transmitting node to the receiving node. A response time of the power control loop is reduced based on the propagation delay time.

In one non-limiting example embodiment, an adjustment value is determined based on the propagation delay time, and the response time of the power control loop is reduced by adjusting the transmission power level using the adjustment value, e.g., an increment having a magnitude less than 1 dB. In other non-limiting example embodiments that may be particularly useful if power adjustment increment size is fixed, an adjustment time is determined based on the propagation delay time. Increment size adjustment and timing adjustment may be used together, if permitted and desired.

In example timing adjustment embodiments, the response time of the power control loop is reduced by adjusting the transmission power level at the determined adjustment time, e.g., sometime after a TPC command is received. One way to control the timing is to adjust the transmission power level by an adjustment value no faster than the propagation delay time. Another way is to adjust the transmission power level by an adjustment value substantially at or near the end of the propagation delay time.

In timeslot-based systems, a number of timeslots associated with the propagation delay time can be determined, e.g., by calculation or lookup table. A cumulative adjustment of the transmission power level may then be made over the number of timeslots. If the system also requires that power adjustments be made incrementally with one of a power increase increment or a power decrease increment implemented each timeslot, then one example way to reduce the response time of the power control loop is to reduce a size of one or both of the power increase increment and the power decrease increment. Another alternative example that is useful when the increment size is fixed is to determine a pattern of power increase and decrease increments that produces a net incremental power adjustment corresponding to the cumulative adjustment by the end of the number of timeslots and use that pattern to reduce the response time of the power control loop.

A non-limiting example embodiment is disclosed for a system where power adjustments are normally made incrementally in accordance with fixed size increments using power increase and power decrease Transmit Power Control (TPC) commands. One of a power increase increment or a power decrease increment must be implemented for each timeslot. If the number of timeslots, x, corresponding to the propagation delay is a positive odd integer greater than one, a sequence of x-1 power increase and decrease increments for x-1 timeslots is generated that cumulatively does not result in a net power increase or decrease. For the xth timeslot, a power increment is generated corresponding to the adjustment value. If the number of timeslots, x, corresponding to the propagation delay is a positive even integer, a first set of x TPC commands corresponding to a first set of x timeslots is stored, e.g., in a buffer along with a second set of x TPC commands corresponding to a second set of x timeslots. A sequence of power increase and decrease increments for the 2x timeslots is generated based on the first and second sets of TPC commands to implement the cumulative adjustment per x timeslots.

Still another non-limiting example embodiment (useful when power adjustment need not be made every timeslot) detects when the propagation delay exceeds a predetermined threshold. In response to that situation, the loop response time is reduced by making incremental power adjustments less frequently than every timeslot.

Although the technology described here may be implemented in any communications node, non-limiting example implementations include in a radio base station and in a mobile station. Reducing the response time of the power control loop based on propagation delay is advantageous because it limits the transmit power oscillations which is very useful towards reducing unnecessary interference in the cell. Interference limits cell capacity and degrades desired signal quality. Transmit power levels with lower oscillation peaks decrease the interference for other users of the system and provide a more stable radio network. Because the oscillation peaks have a lower amplitude, the target signal quality can be decreased that the negative oscillation peak does not dip below the minimum desired signal quality. This also results in a higher average power increasing the battery drain for mobile stations and the interference to other users.

As compared to other approaches to controlling TPC oscillations, the propagation delay-based approach described here is relatively unsophisticated and simple and is straight forward to implement even in existing hardware-based designs. Although this technology is very useful for any radio communications system, it is particularly advantageous for use in large cells sometimes found in rural or less populated areas or anywhere that the base station and mobile stations can communicate over a long distances resulting in substantial propagation delays.

### BRIEF DESCRIPTION OF THE DRAWINGS

FIGURE 1 depicts a large base station cell;
FIGURE 2 illustrates a transmit power control loop between a mobile station and a base station;
FIGURE 3 is a graph showing the oscillatory nature of transmit power control commands for a significant power control loop delay;
FIGURE 4 illustrates example message formats and loop delay components for an uplink transmit power control loop;

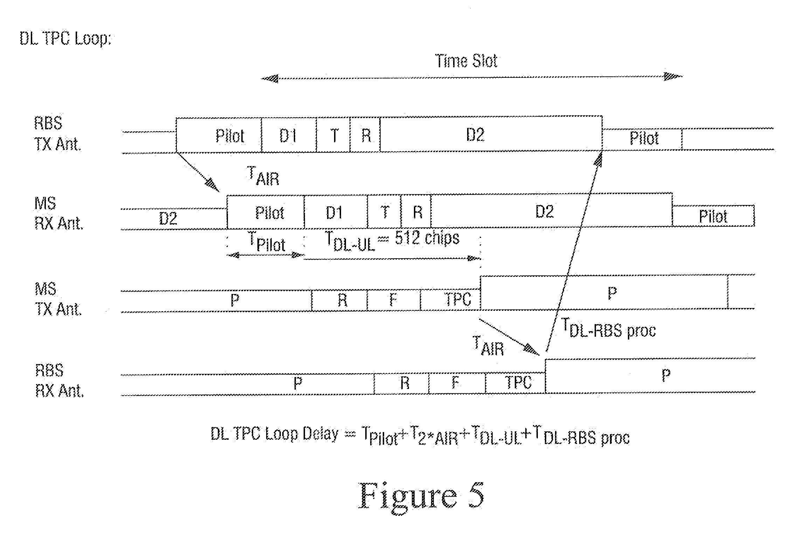

FIGURE 5 illustrates example message formats and loop delay components for a downlink transmit power control loop;
FIGURE 6 is a flowchart outlining example procedures for regulating transmit power adjustment in accordance with a propagation delay between the transmitting node and the receiving node;
FIGURE 7 is a simplified function block diagram showing an example transmit power control loop;
FIGURE 8 is a flowchart outlining example procedures for regulating transmit power adjustment in accordance with a propagation delay between the base station and the mobile station illustrated in Figure 9;
FIGURE 9 is a simplified function block diagram showing an example UL transmit power control loop;
FIGURE 10 is a simplified function block diagram showing an example DL transmit power control loop;
FIGURE 11 is a simplified function block diagram showing an example TPC controller shown in Figures 8 and 9; and
FIGURE 12A replicates the graph in FIGURE 3 to compare with the graph in FIGURE 12B illustrating an example of a compensated TPC waveform.

### DETAILED DESCRIPTION

In the following description, for purposes of explanation and non-limitation, specific details are set forth, such as particular nodes, functional entities, techniques, protocols, standards, etc. in order to provide an understanding of the described technology. It will apparent to one skilled in the art that other embodiments may be practiced apart from the specific details disclosed below. In other instances, detailed descriptions of well-known methods, devices, techniques, etc. are omitted so as not to obscure the description with unnecessary detail. Individual function blocks are shown in the figures. Those skilled in the art will appreciate that the functions of those blocks may be implemented using individual hardware circuits, using software programs and data in conjunction with a suitably programmed microprocessor or general purpose computer, using applications specific integrated circuitry (ASIC), and/or using one or more digital signal processors (DSPs).

In 3GPP an other cellular communications systems, transmit power control must be increased or decreased incrementally, e.g., +1 dB or -1 dB, every timeslot, regardless of whether a power level adjustment is needed. Some examples used below assume one or both of these requirements. But those skilled in the art will appreciate that the following transmit power control technique and technology may be applied to radio communications systems other than 3GPP-based systems and to systems that may not have an always-increment (up or down) every timeslot requirement and/or a fixed increment size.

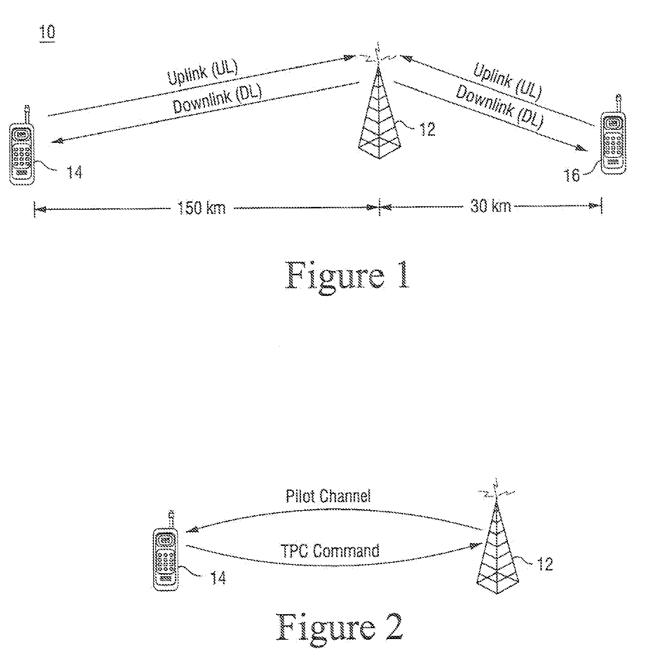

Figure 1 shows an example radio communications system 10 in which a radio base station 12 communicates over a large distance (e.g., 150 km) with a mobile station 14 and over a more moderate distance (e.g. 30 km) with mobile station 16. This situation may arise for example in rural or less congested areas. Such large cells are quite feasible, particularly when the base station is located in an elevated position, e.g., on a hill, etc. While such far reaching coverage is beneficial in terms of providing wireless service without a large number of base stations (a plus in less densely populated areas), the radio path propagation delays can be substantial. Assume for example that a timeslot in the communications system is 666 2/3 microseconds or 0.6667 milliseconds. In that case, a mobile to base station distance of 16 km corresponds to an uplink delay on the order of two timeslots and an downlink propagation delay on the order of one timeslot. Longer mobile to base station distances correspond to uplink and downlink delays of a larger number of timeslots.

These substantial propagation delays have a substantial delay effect on the transmission power control used, for example, in modern cellular communications systems. Fig. 2 also shows a simplified power control loop between the mobile station 14 and the base station 12. Based upon signal-to-interference (SIR) measurements of a received pilot signal transmitted by the base station 12, the mobile station 14 generates transmit power control (TPC) commands and sends them to the base station 12. Although not shown in Figure 2, the base station 12 also sends transmit power control (TPC) commands to the mobile station 14 based on SIR measurements made of signals received from that mobile station. The TPC commands may include one or more bits which indicate a desired incremental increase in transmit power or a desired decrease in transmit power. Of course, any number of bits or bit assignments may be used. Alternatively, an actual transmit power level value may be sent. In order to compensate for possibly rapidly changing transmission conditions, the SIR measurements and resulting transmit power control commands are generated very frequently, e.g., every timeslot. If the timeslot is 666 2/3 microseconds or 1,500 times a second, 1,500 power control commands-each command being either increase by +1 dB or decrease by -1 dB-are issued per second.

Of course, this example is directed to the situation where the time delay associated with the power control loop is on the order of one power control sampling interval, e.g., a timeslot, as defined by the communications protocol between the base and mobile stations. In other words, there is one signal quality parameter measurement and one transmit power command issued during each timeslot whose effect has not yet been experienced. The technology is also applicable to situations where longer time delays result in more than one power command being issued whose effect is not yet experienced by the time the next signal quality measurement is taken.

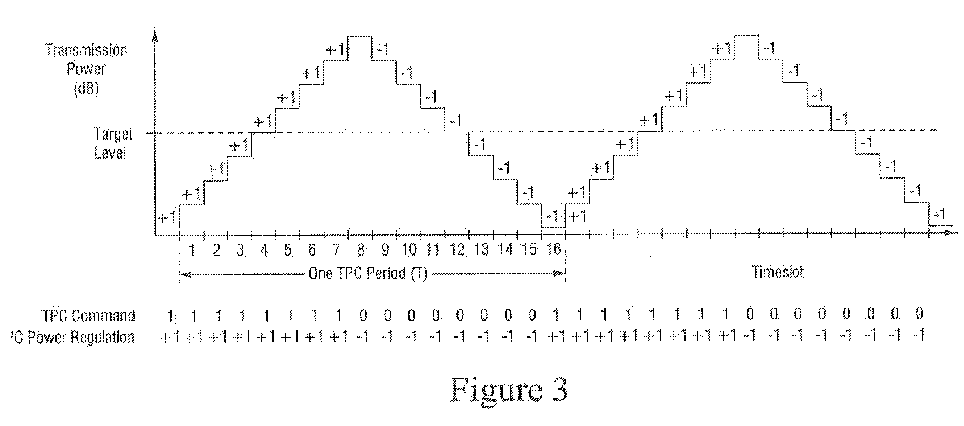

Given a large cell where propagation delays on the order of four timeslots are possible, the TPC oscillation due to a long power loop delay can be substantial. A four timeslot delay example is illustrated in Figure 3. Over a period or cycle of 16 timeslots, the transmission power oscillates 4 dB above and below the target power level with a peak-to-peak swing of 8 dB.

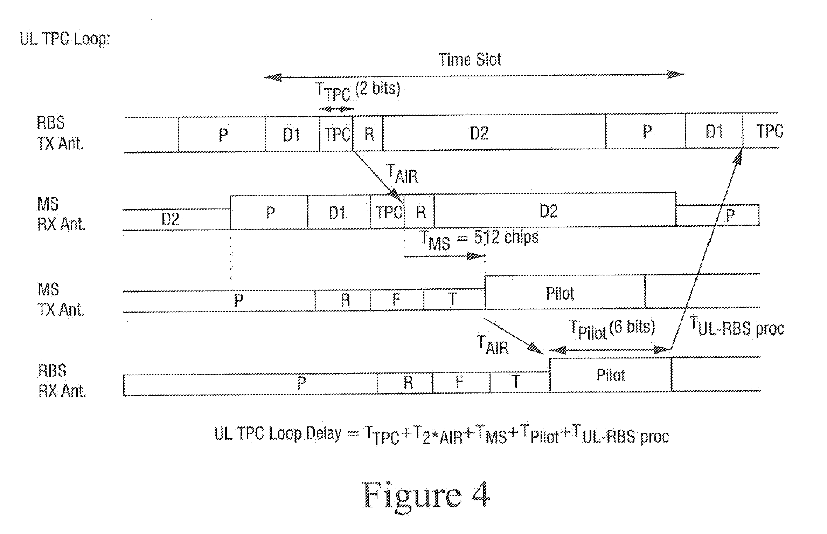

Figure 4 illustrates how an uplink TPC loop delay can be calculated for a 3GPP physical layer pilot bit transmission format where each timeslot is 666 2/3 microseconds. In Figure 4, P=pilot bits, D1 and D2=user data bits, T or TPC=transmit power control bits, R=transport format combination indication (TFCI) information, and F=feedback information (FBI). The base station transmits a timeslot starting with the D1 field and ending with the P field. The mobile receives these pilot bits after a downlink propagation delay T_{Air}. T_{TPC} is the time it takes to transmit the TPC command and depends on the number of bits in the TPC command. The pilot bit pattern is processed in the mobile for a preset period T_{MS} before the mobile sends it back to the base station which takes another propagation delay T_{Air}. The base station must wait the duration of the pilot bits Tₚᵢₗₒₜ before it can process the received message. That processing takes T_{UL-RBSproc}. Consequently, the total uplink TPC loop delay from when the TPC command is generated by the base station as part of its pilot message to when the mobile returns the pilot back to the base station is equal to T_{TPO} + T_{2*AIR} + T_{MS} + T_{PILOT} + T_{UL-RBSproc}.

Similarly, in the downlink TPC loop, the base station transmits a pilot timeslot starting with the D1 field and ending with the P field. The mobile receives that frame after a downlink propagation delay T_{Air}. T_{Pilot} is a time period associated with receiving a predetermined pilot bit pattern recognized by the mobile and used to evaluate the radio channel. The pilot bit pattern is processed in the mobile for a preset period T_{DL-UL} before the mobile sends the pilot bit pattern back to the base station, which takes another propagation delay T_{Air}. The base station processes the received pilot bit pattern for T_{DL-RBSproc}. Consequently, the total downlink TPC loop delay from when the TPC command is generated by the base station to when the mobile returns it is equal to T_{PILOT} + T_{2*AIR} + T_{DL-UL} + T_{UL-RBSproc}.

The inventors recognized that as the distance between the base station and mobile station increases beyond one timeslot, the propagation time takes on a larger and larger proportional of the loop delay. Based on that recognition, the inventors developed a simple and easily-implemented power control scheme that minimizes large oscillations the otherwise occur when substantial power control delays exist based on the propagation time corresponding to the total round trip delay.

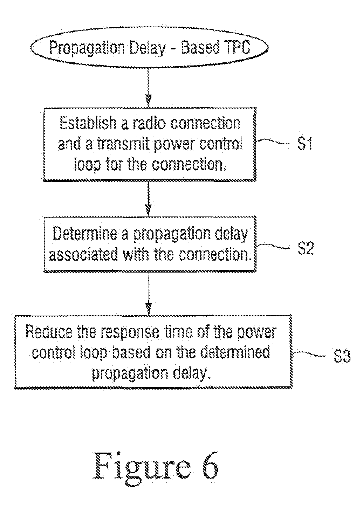

Figure 6 illustrates a flowchart outlining example non-limiting procedures for propagation delay-based transmit power control (TPC). A radio connection between a transmitting node and a receiving node is set up and a power control loop is established for controlling a transmission power level for transmitting a signal from the transmitting node to the receiving node (step S1). A propagation delay time associated with the radio connection is determined (step S2). A response time of the power control loop is reduced based on the propagation delay time (step S3).

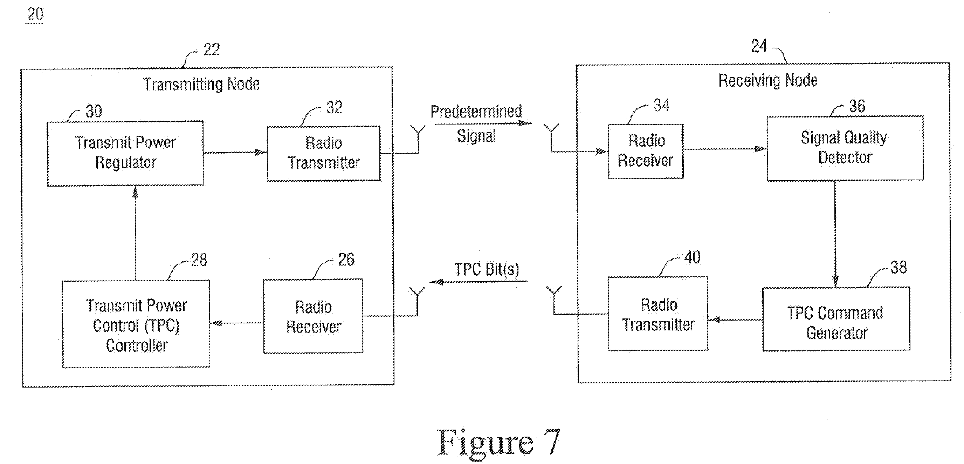

Figure 7 illustrates a simplified block diagram of communications system 20 where a transmitting node 22 communicates over a radio connection with a receiving node 24. The transmitting node 22 includes a radio transmitter 32 that transmits a predetermined signal, e.g., a pilot or other known signal pattern, detected by a radio receiver 34 in the receiving node 24. The received signal is processed by a signal quality detector 36 to determine its received signal quality. For example, the signal quality can be signal-to-interference ratio (SIR). But other quality parameters could be used including carrier-to-interference ratio (CIR), received signal strength (RSSI), bit error rate (BER), etc. The signal quality detector compares the received SIR with a target SIR to generate a difference value. That difference is used by a TPC command generator 38 to calculate a TPC command. The TPC command is forwarded to a radio transmitter 40 which sends one or more TPC bits over the radio connection. A radio receiver 26 in the transmitting node receives the TPC command and provides it to a transmit power control (TPC) controller 28. The TPC controller 28 determines the propagation delay associated with the connection using, for example, the pilot signal sent to the mobile station and returned from the mobile station. Once the delay propagation is determined, the TPC controller 28 controls the transmit power level adjustment amount and/or timing in order to reduce the response time of the power control loop based on the propagation delay. Any suitable methodology for reducing the response time based on the propagation delay in order to reduce transmit power oscillations may be used. Various non-limiting examples are described below.

In one non-limiting example embodiment that is particularly advantageous if the power adjustment increment size is fixed, the TPC controller 28 determines the propagation delay and an adjustment value based on that propagation delay time. For example, if the normal power control loop response is a +1 dB or -1 dB, the adjustment value might have lower magnitude, e.g., + 0.5 dB or - 0.5 dB. The TPC controller 28 reduces response time of the power control loop by adjusting the transmission power level using the adjusted lower step value, which in effect moderates the loop response to the received TPC command.

In another non-limiting example embodiment, the TPC controller 28 determines an adjustment time based on the propagation delay time. Rather, than immediately regulating the power level in accordance with the TPC command, the TPC controller effectively slows the loop response time by implementing the power increase or decrease over a longer period of time. One example way to control the timing is to adjust the transmission power level by an adjustment value no faster than the propagation delay time. Another example way is to adjust the transmission power level by an adjustment value substantially at or near the end of the propagation delay time. Increment adjustment and time adjustment approaches may be used together.

In timeslot type systems, a number of timeslots associated with the propagation delay time can be determined, e.g., by calculation or lookup table. A cumulative adjustment of the transmission power level may then be made over the number of timeslots. If the system also requires that power adjustments be made incrementally with one of a power increase increment or a power decrease increment implemented each timeslot, then one example way to reduce the response time of the power control loop is to reduce a size of one or both of the power increase increment and the power decrease increment for each timeslot. Another alternative example is to determine a pattern of power increase and decrease increments that produces a net incremental power adjustment corresponding to the cumulative adjustment by the end of the number of timeslots and use that pattern to reduce the response time of the power control loop.

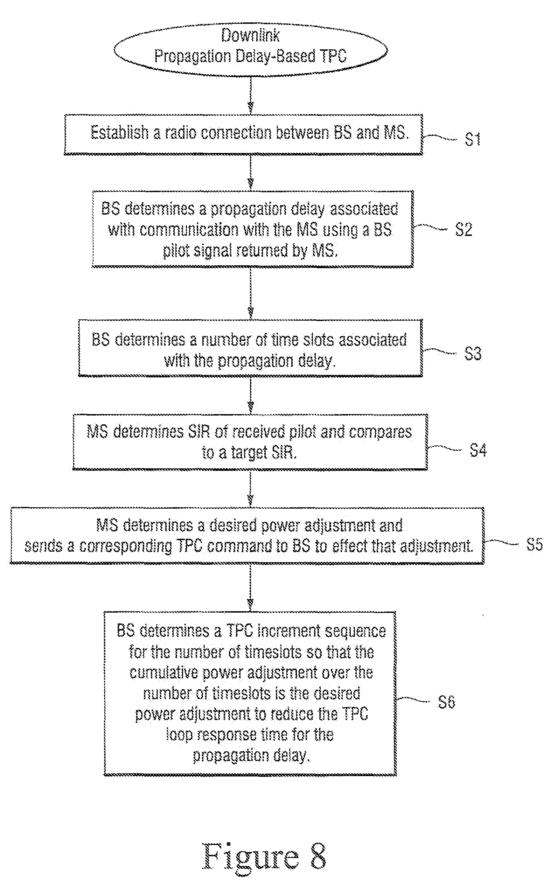

Consider a non-limiting example embodiment for a system where power adjustments are normally made incrementally in accordance with power increase and power decrease Transmit Power Control (TPC) commands. One of a power increase increment or a power decrease increment must be implemented for each timeslot. Figure 8 illustrates a flowchart for an example downlink propagation delay-based TPC.

A radio connection is established between the base station and mobile station (step S1). The base station determines the propagation delay associated with communicating with the mobile station using a base station pilot signal returned by the mobile station (step S2). The base station determines the number of timeslots associated with the propagation delay (step S3). The mobile determines an SIR of the received pilot and compares the received SIR to a target SIR (step S4). The mobile determines the desired power adjustment and sends a corresponding TPC command to the base station to effect that desired power adjustment (step S5). The base station determines a TPC increment sequence for the number of timeslots so that the cumulative power adjustment over the number of timeslots is the desired power adjustment to reduce the TPC loop response time for the propagation delay (step S6).

If the number of timeslots, x, corresponding to the propagation delay is a positive odd integer greater than one, a sequence of x-1 power increase and decrease increments for x-1 timeslots is generated that cumulatively does not result in a net power increase or decrease. For the xth timeslot, a power increment is generated corresponding to the adjustment value. Assume x=3 and the power adjustment value is +1 dB. A sequence of 3-1=2 step values, i.e., +1 dB followed by -1 dB, is applied for the first and second timeslots followed by the 3th step value of +1 dB in the third timeslot. The cumulative adjustment is then +1 dB for three timeslots.

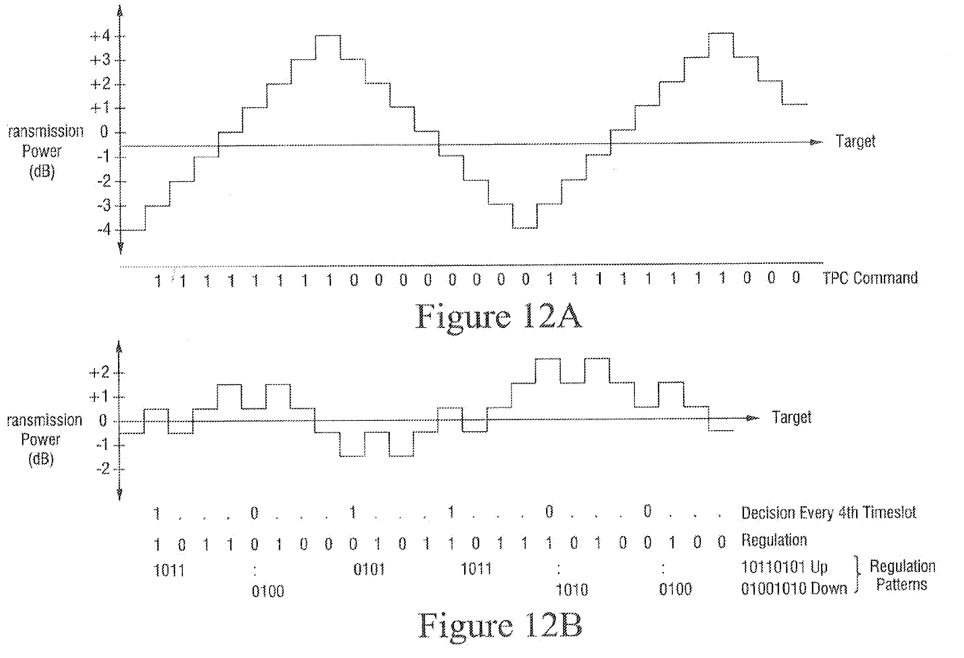

If the number of timeslots, x, corresponding to the propagation delay is a positive even integer, a first set of x TPC commands corresponding to a first set of x timeslots is stored, e.g., in a circular buffer along with a second set of x TPC commands corresponding to a second set of x timeslots. A sequence of power increase and decrease increments for the 2x timeslots is generated based on the first and second sets of TPC commands to implement the cumulative adjustment per x timeslots. Consider an example with three consecutive up TPC commands from a reference TPC pattern 10110101 where 1=+1 dB and 0=-1 dB..For an even number of timeslots, a combination of faster and slower regulation than desired may be used. By alternating between values from the reference TPC pattern, an average net gain can be produced that corresponds to even number of slots. To avoid having to generate a fixed pattern, the position from which the TPC pattern values may be taken can be continually changing. In the example shown in Figure 12B, a first power-up increment corresponds to a pattern of 1011-bits 1-4. The next power-up increment corresponds to 0110-bits 2-5. The next power-up increment corresponds to 1101-bits 3-6.

When incremental power adjustments need not be made every timeslot, another non-limiting example embodiment detects when the propagation delay exceeds a predetermined threshold. In response to that situation, the loop response time is reduced by making incremental power adjustments less frequently than every timeslot. For example, the power may be adjusted only every N^{th} timeslot by selecting "algorithm 2" specified in 3GPP 25.211 when the call is setup. But a drawback with this approach is a fixed delay may result in a control loop that is too slow to respond to changed conditions that require a rapid power control response. According to 3GPP 25.211, once this algorithm 2 is selected, that selection cannot be changed. Moreover, algorithm 2 does not consider propagation delay.

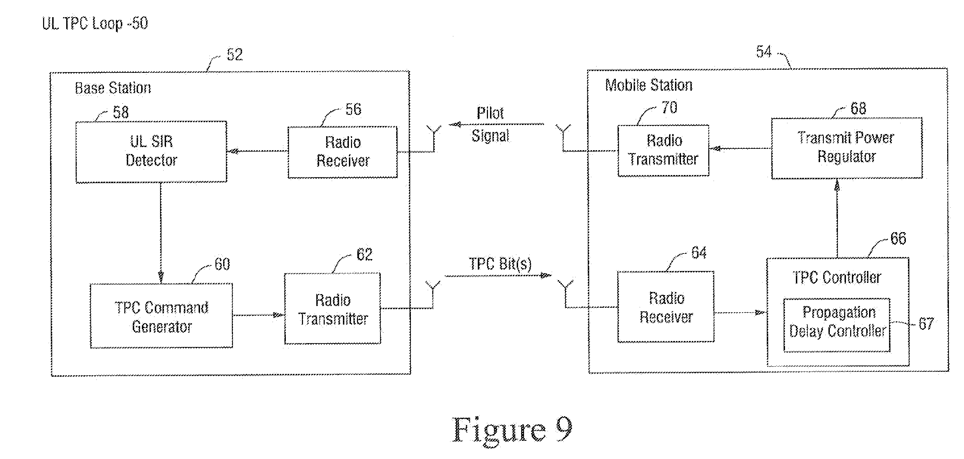

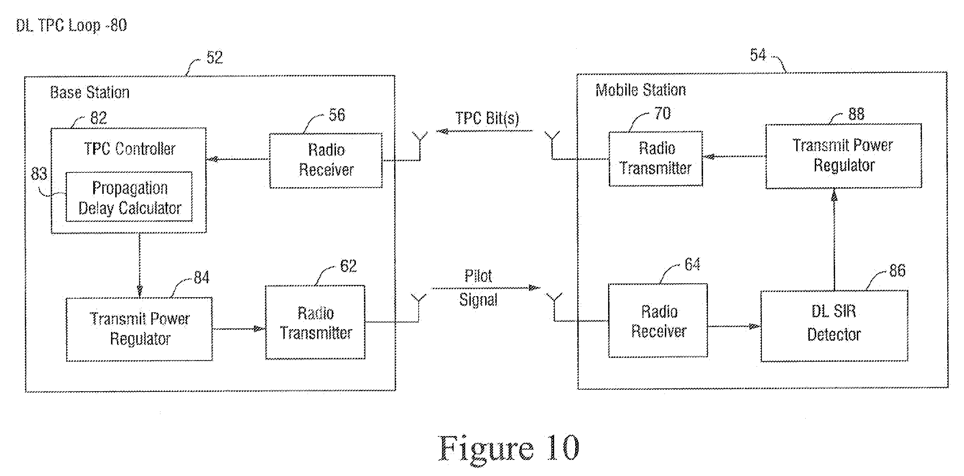

Figures 9 and 10 are function block diagrams that illustrate non-limiting example uplink and downlink transmit power control loops, respectively, as applied to a communication between a base station 52 and a mobile station 54. A radio receiver 56 in the base station 52 receives a base station pilot signal returned from the mobile station 54. An uplink SIR detector 58 detects the SIR of that returned pilot signal, compares it to a target SIR, and provides the SIR difference to a TPC command generator 60. The TPC generator 60 generates a TPC command based upon that SIR difference, and one or more TPC command bits are transmitted by a radio transmitter 62 over the radio channel to the mobile station's radio receiver 64. A TPC controller 66 coupled to the radio receiver 64 includes a propagation delay controller 67 that calculates the propagation delay associated with the connection. The transmit power controller 66 modifies the transmit power control command based on the calculated propagation delay and provides an adjusted transmit power control signal to the transmit power regulator 68, which adjusts the transmission power of the radio transmitter 70 accordingly.

In the downlink TPC loop 80 in Figure 10, the radio receiver 64 in the mobile station 54 receives a pilot signal from the base station 52. The downlink SIR detector 86 detects the SIR of the received signal, compares it to a target SIR, and forwards the difference to the TPC command generator 88. The TPC command generator 88 generates one or more TPC bits for reducing that SIR difference. The TPC bits are sent over the radio connection to a radio receiver 56 in the base station 52. The TPC controller 82 includes a propagation delay calculator 83 which calculates the propagation delay for the communication between the base station and mobile station in accordance with the round trip propagation delay calculated for a base station transmitted pilot signal. The TPC controller 82 determines a transmission power level adjustment in accordance with the propagation delay and sends an associated power control signal to radio transmitter 62 to adjust the power level at which it transmits the pilot signal.

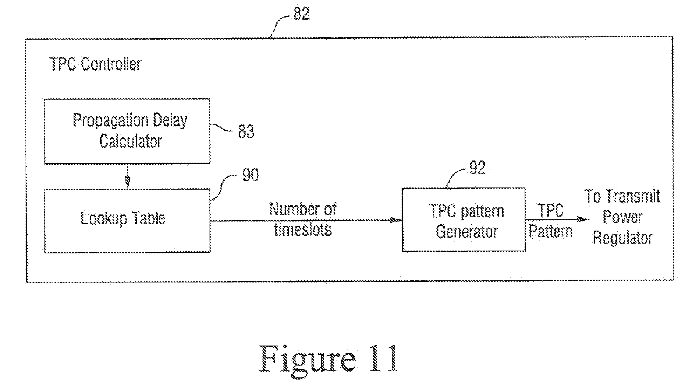

Figure 11 illustrates one non-limiting example embodiment for the TPC controller 82 in which the propagation delay is translated into an associated number of timeslots delay. The propagation delay calculator 83 uses the calculated propagation delay as an index to a look-up table 90 which outputs a corresponding number of timeslots to a TPC pattern generator 92. Based on the number of timeslots, the TPC pattern generator 92 generates a TPC pattern (i.e., a particular sequence of TPC commands) that effects a cumulative adjustment of the transmission power level over that number of propagation delay timeslots in order to reduce the response time of the power control loop. Example patterns for odd and even numbers to timeslots were described above.

Figure 12A illustrates the transmission power that results from the same series of TPC commands ordered for Figure 3. As compared to Figure 12A, Figure 12B provides significantly improved transmission power oscillation performance. The power level oscillations in Figure 12B track more closely the target value than in Figure 12A. Rather than the 8 dB peak-to-peak oscillation in Figure 12A, Figure 12B shows only a 3 dB peak-to-peak oscillation.

Figure 12B also shows one non-limiting example of a TPC command sequence for an even number of timeslots. Although TPC commands are received every timeslot, the TPC controller only makes a decision whether to increase or decrease the transmission power every 4^{th} timeslot corresponding to a four timeslot propagation delay. In the example in Figure 12B, transmission power is adjusted every timeslot by either +1 or -1 dB, with a "1" representing +1 dB and a "0" representing -1 dB. Assume the TPC controller wants to provide a cumulative or net power increase of 1 dB per four timeslots but that it is not permitted or possible to increase the power 0.25 dB each timeslot. To accomplish this odd number net power increase (e.g., +1 dB) over an even number of timeslots, e.g., four timeslots, the regulation is averaged over four timeslot periods. In this case, a power-up command is signaled using a selected one of four bit long sequences from the bit pattern 10110101, and a power-down command is signaled using a selected one of four bit long sequences from the bit pattern 01001010. The first regulate "up" decision is generated using the bit sequence 1011 (which is a net gain of +2 dBs/four timeslots) corresponding to the first four bits of the bit pattern 10110101. The second regulate down decision is generated using the bit sequence 0100 (which is a net gain of -2 dBs/four timeslots) corresponding to the first four bits of the bit pattern 01001010. The next decision is regulate "up" and is generated using the bit sequence 0101 (which is a net gain of 0 dB/four timeslots) corresponding to the last four bits of the bit pattern 10110101. The next decision is regulate "up" and is generated using the bit sequence 1011 again (which is a net gain of +2 dB/four timeslots) corresponding to the last four bits of the bit pattern 10110101. The pattern includes 3 power-down commands and 5 power-up commands in 8 timeslots thereby producing a gain of 5-3=2dB in 8 slots or 1 dB per 4 slots.

Although various embodiments have been shown and described in detail, the claims are not limited to any particular embodiment or example. For example, although the technology described here may be implemented in any communications node, non-limiting example implementations include in a radio base station and in a mobile station. None of the above description should be read as implying that any particular element, step, range, or function is essential such that it must be included in the claims scope. The scope of patented subject matter is defined only by the claims.

## Claims

1. A method for controlling transmit power of a radio transmitter associated with a transmitting node (12, 14) communicating with a receiving node (12, 14), comprising transmitting a signal from the transmitting node to the receiving node at a transmission power level controlled by a power control loop, comprising steps of:
determining a propagation delay time associated with communication between the transmitting node and the receiving node, and **characterized by**:
determining an adjustment value based on the propagation delay time, reducing a response time of the power control loop by adjusting the transmission power level using the adjustment value.

2. The method in claim 1, further comprising:
determining an adjustment time based on the propagation delay time, and
reducing the response time of the power control loop by adjusting the transmission power level at the adjustment time.

3. The method in claim 1, wherein the reducing step includes adjusting the transmission power level by an adjustment value no faster than the propagation delay time.

4. The method in claim 1, wherein the reducing step includes adjusting the transmission power level by an adjustment value at or near the end of the propagation delay time.

5. The method claim 1, further comprising:
determining a number of timeslots associated with the propagation delay time; and
wherein the reducing step includes making a cumulative adjustment of the transmission power level over the number of timeslots.

6. The method in claim 5, wherein power adjustments are made incrementally with one of a power increase increment or a power decrease increment implemented each timeslot, the method further comprising:
reducing a size of one or both of the power increase increment and the power decrease increment.

7. The method in claim 5, wherein power adjustments are made incrementally with one of a power increase increment or a power decrease increment implemented each timeslot, the method further comprising:
determining a pattern of power increase and decrease increments that produces a net incremental power adjustment corresponding to the cumulative adjustment by the end of the number of timeslots.

8. The method in claim 1, wherein the power control loop includes making power adjustments incrementally with one of a power increase increment or a power decrease increment implemented each timeslot, the method further comprising:
detecting that the propagation delay exceeds a predetermined threshold, and
in response, the reducing step includes making incremental power adjustments less frequently than every timeslot.

9. Apparatus for use in a transmitting node (22), comprising:
a transmitter (32) for transmitting a signal from the transmitting node to the receiving node (24) at a transmission power level controlled by a power control loop, and
electronic circuitry (50, 67, 83) configured to:
determine a propagation delay time associated with communication between the transmitting node and the receiving node and **characterized by**:
determine an adjustment value based on the propagation delay time,
reduce a response time of the power control loop based on the propagation delay time by adjusting the transmission power level using the adjustment value.

10. The apparatus in claim 9, wherein the electronic circuitry is configured to:
determine an adjustment time based on the propagation delay time, and
reduce the response time of the power control loop by adjusting the transmission power level at the adjustment time.

11. The apparatus in claim 9, wherein the electronic circuitry is configured to adjust the transmission power level by an adjustment value no faster than the propagation delay time.

12. The apparatus in claim 9, wherein the electronic circuitry is configured to adjust the transmission power level by an adjustment value at or near the end of the propagation delay time.

13. The apparatus in claim 9, wherein the electronic circuitry is configured to:
determine a number of timeslots associated with the propagation delay time; and
make a cumulative adjustment of the transmission power level over the number of timeslots.

14. The apparatus in claim 13, wherein the electronic circuitry is configured to:
make power adjustments incrementally with one of a power increase increment or a power decrease increment implemented each timeslot; and
reduce a size of one or both of the power increase increment and the power decrease increment.

15. The apparatus in claim 13, wherein the electronic circuitry is configured to:
make power adjustments incrementally with one of a power increase increment or a power decrease increment implemented each timeslot;
determine a pattern of power increase and decrease increments that will produce a net incremental power adjustment corresponding to the cumulative adjustment by the end of the number of timeslots; and
use the determined pattern to reduce a response time of the power control loop based on the propagation delay time.

16. The apparatus in claim 13, wherein the electronic circuitry is configured to:
make incremental making power adjustments with one of a power increase increment or a power decrease increment implemented each timeslot;
detect that the propagation delay exceeds a predetermined threshold, and
in response, the reducing step includes making incremental power adjustments less frequently than every timeslot.

## Patentansprüche

1. Verfahren zum Regeln der Sendeleistung eines Funksenders, welcher einem Sendeknoten (12,14) zugeordnet ist, welcher mit einem Empfangsknoten (12, 14) kommuniziert, umfassend das Senden eines Signals vom Sendeknoten zum Empfangsknoten bei einem Sendeleistungspegel, welcher von einer Leistungsregelschleife geregelt wird, umfassend die Schritte:
Bestimmen einer Ausbreitungsverzögerungszeit, welche der Kommunikation zwischen dem Sendeknoten und dem Empfangsknoten zugeordnet ist, und **gekennzeichnet durch**:
Bestimmen eines Anpassungswerts auf der Basis der Ausbreitungsverzögerungszeit,
Reduzieren einer Reaktionszeit der Leistungsregelschleife mittels Regelung des Sendeleistungspegels unter Verwendung des Anpassungswerts.

2. Verfahren nach Anspruch 1, ferner umfassend:
Bestimmen einer Anpassungszeit auf der Basis der Ausbreitungsverzögerungszeit, und
Reduzieren der Reaktionszeit der Leistungsregelschleife durch Anpassen des Sendeleistungspegels zu dem Zeitpunkt der Anpassung.

3. Verfahren nach Anspruch 1, wobei der Schritt des Reduzierens das Anpassen des Sendeleistungspegels um einen Anpassungswert umfasst, welcher nicht schneller als die Ausbreitungsverzögerungszeit ist.

4. Verfahren nach Anspruch 1, wobei der Schritt des Reduzierens das Anpassen des Sendeleistungspegels um einen Anpassungswert zu dem Zeitpunkt oder nahe am Ende der Ausbreitungsverzögerungszeit umfasst.

5. Verfahren nach Anspruch 1, ferner umfassend:
Bestimmen einer Anzahl von Zeitschlitzen, welche der Ausbreitungsverzögerungszeit zugeordnet sind; und
wobei der Schritt des Reduzierens ein kumulatives Anpassen des Sendeleistungspegels über die Anzahl von Zeitschlitzen umfasst.

6. Verfahren nach Anspruch 5, wobei die Leistungsanpassungen inkrementell ausgeführt werden, wobei eines von einem Leistungserhöhungsinkrement oder einem Leistungsverringerungsinkrement in jedem Zeitschlitz implementiert wird, wobei das Verfahren ferner umfasst:
Reduzieren einer Größe eines von beiden oder sowohl des Leistungserhöhungsinkrements als auch des Leistungsverringerungsinkrements.

7. Verfahren nach Anspruch 5, wobei die Leistungsanpassungen inkrementell ausgeführt werden, wobei eines von einem Leistungserhöhungsinkrement oder einem Leistungsverringerungsinkrement in jedem Zeitschlitz implementiert wird, wobei das Verfahren ferner umfasst:
Bestimmen eines Musters von Leistungserhöhungs- und Leistungsverringerungsinkrementen, welches eine inkrementelle Nettoleistungsanpassung ergibt, welche der kumulativen Anpassung am Ende der Anzahl von Zeitschlitzen entspricht.

8. Verfahren nach Anspruch 1, wobei die Leistungsregelschleife das Ausführen von inkrementellen Leistungsanpassungen umfasst, wobei eines von einem Leistungserhöhungsinkrement oder einem Leistungsverringerungsinkrement in jedem Zeitschlitz implementiert wird, wobei das Verfahren ferner umfasst:
Erfassen, dass die Ausbreitungsverzögerung eine vorbestimmte Schwelle überschreitet, und
wobei als Reaktion der Schritt des Reduzierens das Ausführen von inkrementellen Leistungsanpassungen weniger häufig als in jedem Zeitschlitz umfasst.

9. Vorrichtung zum Verwenden in einem Sendeknoten (22), umfassend:
einen Sender (32) zum Senden eines Signals vom Sendeknoten zum Empfangsknoten (24) bei einem Sendeleistungspegel, welcher von einer Leistungsregelschleife geregelt wird, und
elektronische Schaltkreise (50, 67, 83), welche konfiguriert sind zum:
Bestimmen einer Ausbreitungsverzögerungszeit, welche der Kommunikation zwischen dem Sendeknoten und dem Empfangsknoten zugeordnet ist, und **gekennzeichnet durch**:
Bestimmen eines Anpassungswerts auf der Basis der Ausbreitungsverzögerungszeit,
Reduzieren einer Reaktionszeit der Leistungsregelschleife auf der Basis der Ausbreitungsverzögerungszeit mittels Regelung des Sendeleistungspegels unter Verwendung des Anpassungswerts.

10. Vorrichtung nach Anspruch 9, wobei die elektronischen Schaltkreise konfiguriert sind zum:
Bestimmen einer Anpassungszeit auf der Basis der Ausbreitungsverzögerungszeit, und
Reduzieren der Reaktionszeit der Leistungsregelschleife durch Anpassen des Sendeleistungspegels zu dem Zeitpunkt der Anpassung.

11. Vorrichtung nach Anspruch 9, wobei die elektronischen Schaltkreise zum Anpassen des Sendeleistungspegels um einen Anpassungswert konfiguriert sind, welcher nicht schneller als die Ausbreitungsverzögerungszeit ist.

12. Verfahren nach Anspruch 9, wobei die elektronischen Schaltkreise zum Anpassen des Sendeleistungspegels um einen Anpassungswert zu dem Zeitpunkt oder nahe am Ende der Ausbreitungsverzögerungszeit konfiguriert sind.

13. Verfahren nach Anspruch 9, wobei die elektronischen Schaltkreise konfiguriert sind zum:
Bestimmen einer Anzahl von Zeitschlitzen, welche der Ausbreitungsverzögerungszeit zugeordnet sind; und
Ausführen einer kumulativen Anpassung des Sendeleistungspegels über die Anzahl von Zeitschlitzen.

14. Vorrichtung nach Anspruch 13, wobei die elektronischen Schaltkreise konfiguriert sind zum:
inkrementellen Ausführen von Leistungsanpassungen, wobei eines von einem Leistungserhöhungsinkrement oder einem Leistungsverringerungsinkrement in jedem Zeitschlitz implementiert wird; und
Reduzieren der Größe eines der beiden oder sowohl des Leistungserhöhungsinkrements als auch des Leistungsverringerungsinkrements.

15. Vorrichtung nach Anspruch 13, wobei die elektronischen Schaltkreise konfiguriert sind zum:
inkrementellen Ausführen von Leistungsanpassungen, wobei eines von einem Leistungserhöhungsinkrement oder einem Leistungsverringerungsinkrement in jedem Zeitschlitz implementiert wird;
Bestimmen eines Musters von Leistungserhöhungs- und Leistungsverringerungsinkrementen, welches eine inkrementelle Nettoleistungsanpassung ergibt, welche der kumulativen Anpassung am Ende der Anzahl von Zeitschlitzen entspricht; und
Verwenden des ermittelten Musters, um eine Reaktionszeit der Leistungsregelschleife auf der Basis der Ausbreitungsverzögerungszeit zu reduzieren.

16. Vorrichtung nach Anspruch 13, wobei die elektronischen Schaltkreise konfiguriert sind zum:
inkrementellen Ausführen von Leistungsanpassungen, wobei eines von einem Leistungserhöhungsinkrement oder einem Leistungsverringerungsinkrement in jedem Zeitschlitz implementiert wird;
Erfassen, dass die Ausbreitungsverzögerung eine vorbestimmte Schwelle überschreitet, und
wobei, als Reaktion der Schritt des Reduzierens das Ausführen von inkrementellen Leistungsanpassungen weniger häufig als in jedem Zeitschlitz umfasst.

## Revendications

1. Procédé de régulation de puissance de transmission d'un émetteur radio associé à un noeud de transmission (12, 14) communiquant avec un noeud de réception (12, 14), comprenant la transmission d'un signal, du noeud de transmission au noeud de réception, à un niveau de puissance de transmission commandé par une boucle de régulation de puissance, comprenant l'étape ci-dessous consistant à :
déterminer un temps de retard de propagation associé à la communication entre le noeud de transmission et le noeud de réception, et **caractérisé par** les étapes ci-dessous consistant à :
déterminer une valeur d'ajustement sur la base du temps de retard de propagation ;
réduire un temps de réponse de la boucle de régulation de puissance en ajustant le niveau de puissance de transmission au moyen de la valeur d'ajustement.

2. Procédé selon la revendication 1, comprenant en outre les étapes ci-dessous consistant à :
déterminer un temps d'ajustement sur la base du temps de retard de propagation ; et
réduire le temps de réponse de la boucle de régulation de puissance en ajustant le niveau de puissance de transmission au temps d'ajustement.

3. Procédé selon la revendication 1, dans lequel l'étape de réduction inclut l'étape consistant à ajuster le niveau de puissance de transmission par une valeur d'ajustement inférieure au temps de retard de propagation.

4. Procédé selon la revendication 1, dans lequel l'étape de réduction inclut l'étape consistant à ajuster le niveau de puissance de transmission par une valeur d'ajustement à ou proche de la fin du temps de retard de propagation.

5. Procédé selon la revendication 1, comprenant en outre l'étape ci-dessous consistant à :
déterminer un nombre de tranches de temps associé au temps de retard de propagation ; et
dans lequel l'étape de réduction inclut l'étape consistant à effectuer un ajustement cumulatif du niveau de puissance de transmission sur le nombre de tranches de temps.

6. Procédé selon la revendication 5, dans lequel les ajustements de puissance sont effectués de manière incrémentielle avec l'un parmi un incrément d'augmentation de puissance ou un incrément de diminution de puissance mis en oeuvre à chaque tranche de temps, le procédé comprenant en outre l'étape ci-dessous consistant à :
réduire une taille de l'un et/ou l'autre parmi l'incrément d'augmentation de puissance et l'incrément de diminution de puissance.

7. Procédé selon la revendication 5, dans lequel les ajustements de puissance sont effectués de manière incrémentielle avec l'un parmi un incrément d'augmentation de puissance ou un incrément de diminution de puissance mis en oeuvre à chaque tranche de temps, le procédé comprenant en outre l'étape ci-dessous consistant à :
déterminer un motif d'incréments d'augmentation et de diminution de puissance qui produit un ajustement de puissance incrémentiel net correspondant à l'ajustement cumulatif à la fin du nombre de tranches de temps.

8. Procédé selon la revendication 1, dans lequel la boucle de régulation de puissance inclut la réalisation d'ajustements de puissance de manière incrémentielle avec l'un parmi un incrément d'augmentation de puissance ou un incrément de diminution de puissance mis en oeuvre à chaque tranche de temps, le procédé comprenant en outre l'étape ci-dessous consistant à :
détecter que le retard de propagation dépasse un seuil prédéterminé ; et
dans lequel, en réponse, l'étape de réduction inclut l'étape consistant à effectuer des ajustements de puissance incrémentiels moins fréquemment qu'à chaque tranche de temps.

9. Appareil destiné à être utilisé dans un noeud de transmission (22), comprenant :
un émetteur (32) destiné à transmettre un signal, du noeud de transmission au noeud de réception (24), à un niveau de puissance de transmission commandé par une boucle de régulation de puissance ; et
un montage de circuits électroniques (50, 67, 83) configuré de manière à :
déterminer un temps de retard de propagation associé à la communication entre le noeud de transmission et le noeud de réception, et **caractérisé par** les étapes ci-dessous consistant à :
déterminer une valeur d'ajustement sur la base du temps de retard de propagation ;
réduire un temps de réponse de la boucle de régulation de puissance sur la base du temps de retard de propagation en ajustant le niveau de puissance de transmission au moyen de la valeur d'ajustement.

10. Appareil selon la revendication 9, dans lequel le montage de circuits électroniques est configuré de manière à :
déterminer un temps d'ajustement sur la base du temps de retard de propagation ; et
réduire le temps de réponse de la boucle de régulation de puissance en ajustant le niveau de puissance de transmission au temps d'ajustement.

11. Appareil selon la revendication 9, dans lequel le montage de circuits électroniques est configuré de manière à ajuster le niveau de puissance de transmission par une valeur d'ajustement inférieure au temps de retard de propagation.

12. Appareil selon la revendication 9, dans lequel le montage de circuits électroniques est configuré de manière à ajuster le niveau de puissance de transmission par une valeur d'ajustement à ou proche de la fin du temps de retard de propagation.

13. Appareil selon la revendication 9, dans lequel le montage de circuits électroniques est configuré de manière à :
déterminer un nombre de tranches de temps associé au temps de retard de propagation ; et
effectuer un ajustement cumulatif du niveau de puissance de transmission sur le nombre de tranches de temps.

14. Appareil selon la revendication 13, dans lequel le montage de circuits électroniques est configuré de manière à :
effectuer des ajustements de puissance de manière incrémentielle avec l'un parmi un incrément d'augmentation de puissance ou un incrément de diminution de puissance mis en oeuvre à chaque tranche de temps ; et
réduire une taille de l'un et/ou l'autre parmi l'incrément d'augmentation de puissance et l'incrément de diminution de puissance.

15. Appareil selon la revendication 13, dans lequel le montage de circuits électroniques est configuré de manière à :
effectuer des ajustements de puissance de manière incrémentielle avec l'un parmi un incrément d'augmentation de puissance ou un incrément de diminution de puissance mis en oeuvre à chaque tranche de temps ;
déterminer un motif d'incréments d'augmentation et de diminution de puissance qui produira un ajustement de puissance incrémentiel net correspondant à l'ajustement cumulatif à la fin du nombre de tranches de temps ; et
utiliser le motif déterminé en vue de réduire un temps de réponse de la boucle de régulation de puissance sur la base du temps de retard de propagation.

16. Appareil selon la revendication 13, dans lequel le montage de circuits électroniques est configuré de manière à :
effectuer des ajustements de puissance incrémentiels avec l'un parmi un incrément d'augmentation de puissance ou un incrément de diminution de puissance mis en oeuvre à chaque tranche de temps ;
détecter que le retard de propagation dépasse un seuil prédéterminé ; et
dans lequel, en réponse, l'étape de réduction inclut l'étape consistant à effectuer des ajustements de puissance incrémentiels moins fréquemment qu'à chaque tranche de temps.
